# EUROPEAN PATENT APPLICATION

(11) **EP 3 486 475 A1**
(43) Date of publication of application: **22.05.2019**
(21) Application number: 18200301.2
(22) Date of filing: 15.10.2018
(51) Int. Cl.: F02M 63/00, F02B 75/02, F02D 41/14, F02M 47/02, F02M 57/00, F02M 61/20, F02D 41/34

(54) **INJECTION DEVICE AND METHOD FOR INJECTING A FUEL INTO A CYLINDER AND LARGE DIESEL ENGINE**

(30) Priority: 15.11.2017 EP 17201938
(71) Applicant: Winterthur Gas & Diesel AG, 8401 Winterthur (CH)
(72) Inventor: Carelli, Andreas, 8305 Dietlikon (CH); Galdeano, Gorka, 8400 Winterthur (CH); Grote, Norbert, 8404 Winterthur (CH); Hänfling, Adrian, 9542 Münchwilen (CH); Jia, Yongfeng, 8408 Winterthur (CH); Yildirim, Turhan, 8408 Winterthur (CH)
(74) Representative: Intellectual Property Services GmbH

(57) **Abstract**

An injection device is proposed for injecting a fuel into a cylinder (11) of a large diesel engine, comprising an injector (3) extending in an axial direction (A), and an injection control unit (2), wherein the injector (3) comprises a fuel inlet (31) for receiving pressurized fuel from a pressure reservoir (16), a nozzle (32) for injecting the fuel into the cylinder (11), and a connection line (33) connecting the fuel inlet (31) with the nozzle (32), wherein the injection control unit (2) comprises a housing (21), in which an actuator (22) is arranged being movable between an opening position and a closing position, wherein the connection line (33) of the injector (3) is closed when the actuator (22) is in the closing position, and the connection line (33) is open, when the actuator (22) is in the opening position, and wherein the injection control unit (2) comprises a control valve (4) for causing a movement of the actuator (22) between the opening and the closing position, with the control valve (4) being electronically controllable, and wherein the housing (21) of the injection control unit (2) is directly mounted to the injector (3), so that the housing (21) and the injector (3) form a constructional unit. In addition, a method for injecting a fuel into a cylinder of a large diesel engine as well as a large diesel engine are proposed.

## Description

The invention relates to an injection device and a method for injecting a fuel into a cylinder of a large diesel engine in accordance with the preamble of the independent claim of the respective category. Furthermore, the invention relates to a large diesel engine, especially a large two-stroke diesel engine, having such an injection device or operated with such a method.

Large diesel engines, which can be designed as two-stroke or four-stroke engines, for example as large two-stroke diesel engine with longitudinal scavenging, are often used as main propulsion units for ships or also in stationary operation, for example for driving large generators for the production of electrical power. Here as a rule the engines are in constant operation over a considerable period of time which makes high demands on the operating reliability and availability. For this reason, for the operators, long and predictable intervals between services, low degrees of wear and, an economical use of fuel and operating materials are central criteria for the operation of the engine.

Especially in view of the growing requirements regarding protection of the environment the operation of large diesel engines becomes more and more demanding. Large diesel engines are mostly operated with heavy oil that requires specific measures with regard to the exhaust resulting from the combustion. In view of the stronger statutory provisions regarding the limitation of exhaust a need exists now for several years for so-called dual-fuel motors. These are engines that can be operated with two different fuels. In a gas mode, a gas, for example natural gas like LNG (liquefied natural gas) or another suited gas for operating an internal combustion engine is used for the combustion in the cylinders. In a liquid mode, a suited liquid fuel like gasoline, diesel or heavy oil is used for the combustion in the cylinders of the same engine.

Within the scope of this application the term "large diesel engine" or the like encompasses also such large engines, which can be operated beside the diesel operation, that is characterized by the self-ignition of the fuel, also in an Otto operation, that is characterized by an external ignition, or in a mixed form of these two operations. More generally the term "large diesel engine" also encompasses large engines, which can be operated alternatively with at least two different fuels, wherein at least one of the fuels is suited to operate the engine according to the diesel method of operation.

Modern large diesel engines are electronically controlled and usually comprise a common rail system with a pressure reservoir for supplying the fuel, e.g. heavy oil, to the cylinders. Usually the pressure reservoir is designed as a tubular accumulator extending along all the cylinders of the engine. The fuel in the pressure reservoir has a pressure of several hundred bar, for example 700-900 bar, but the pressure may also be higher, even more than 1000 bar.

For each cylinder at least one, but typically two or three electronically controlled injection devices are provided being connected to the pressure reservoir for receiving pressurized fuel from there. Each injection device comprises an injection control unit and an injector. The injector has a springloaded valve member cooperating with a valve seat as well as a nozzle for injecting the fuel into the combustion chamber of the cylinder. The injector is in fluid communication with the pressure reservoir. If the valve member of the injector is lifted from the valve seat the pressurized fuel can pass between the valve member and the valve seat and enters the nozzle for being injected into the combustion chamber. If the valve member is pressed into the valve seat the connection to the nozzle is closed and no fuel can reach the nozzle.

The injection control unit of the injection device controls the timing of the fuel injection based upon electric or electronic signals delivered by a system control unit or a motor control unit. Upon a respective signal the injection control unit opens a fluid communication between the pressure reservoir and the valve member of the injector, so that the high pressure of the fuel at the valve member prevails the spring load. Accordingly, the pressurized fuel lifts the valve member from the valve seat against the action of the spring and the fuel can enter the nozzle for being injected. For terminating the injection, the injection control unit closes the flow connection between the pressure reservoir and the valve member of the injector, so that the spring load forces the valve member in a sealing contact with the valve seat. Thus, no more fuel can pass through between the valve member and the valve seat of the injector and the injection of fuel is terminated.

According to a known design the injection control units of all injection devices are mounted to the pressure reservoir of the common rail system, i.e. to the tubular accumulator for the pressurized fuel. Each injection control unit is connected to its respective injector by a pressure pipe extending from the injection control unit at the pressure reservoir to the injector, which is mounted to the cylinder, usually to the cylinder head or cover, so that the respective nozzle is located at or in the combustion chamber of the respective cylinder. For actuating the injection control unit, i.e. for starting and terminating the injection of fuel, each injection control unit comprises a control valve, the so-called rail valve, which is fixed to the pressure reservoir or to the injection control unit, or which is integrated in the injection control unit. The rail valve is an electronically controllable valve that functions as a pilot valve for causing the injection control unit to open or to close the fluid connection between the pressure reservoir and the respective injector.

Usually, the rail valve comprises electromagnets, for example two electromagnets, for acting on an armature that can be moved from a first position to a second position and vice versa. The armature is used to control the flow of a system fluid, for example an oil or another hydraulic liquid, which system fluid is used to actuate the injection control unit. As an example, when the armature is in its first position a flowing of the system fluid into the injection control unit is prevented. The injection control unit is in a state, in which the flow connection between the pressure reservoir and the injector is closed. When one of the electromagnets attracts the armature to move from its first position to its second position, the armature opens a fluid communication, so that the system fluid can enter the injection control unit. By the action of the system fluid the injection control unit opens the fluid connection between the pressure reservoir and the respective injector, so that the injection of fuel into the cylinder starts. For terminating the injection, the other electromagnet is energized to attract the armature and the armature moves from the second position back to the first position. The flow of system fluid into the injection control device is stopped. This causes the injection control unit to close the fluid connection between the pressure reservoir and the injector, so that the injection of fuel into the cylinder is terminated. Thus, the injection of the fuel into the cylinder is controlled by sending a first electric or electronic signal to the control valve for energizing one of the electromagnets in order to start the injection, and by sending a second signal to the other electromagnet in order to terminate the injection of fuel into the cylinder.

Additionally, it is a known measure to provide a respective safety valve for each injection control unit at the pressure reservoir. The safety valve restricts the amount of fuel that is supplied to the injector for one injection to a maximum value. During normal, i.e. failure-free operation of the engine the safety valve has no influence on the injection process. However, in case of a failure, for example a leakage or a crack downstream of the injection control unit, the safety valve delimits the maximum amount of fuel that can leak.

Although the injection system described hereinbefore has proven to operate reliably in practice there is still a need for improvement. One of the problems are inertia effects or dispersion effects in the injection system. Although the electric or electronic signals that determine the beginning and the termination of the injection process may be generated and provided to the control valve (rail valve) as well-defined, sharp and accurately timed signals, the real injection of the fuel into the cylinder caused by such signals may deviate from the desired timing and shape (e.g. time profile) for the injection.

The physical properties of the involved components such as the rail valve, the injection control unit, the injector, the fuel and the system fluid cause delays and dispersion. E.g., there is always a delay between the electronic signal causing the beginning or the end of the injection and the real beginning or ending of the injection process. In addition, the rising edge and the trailing edge of the electronic signal actuating the rail valve may be considerably steeper than the beginning or the ending of the injection process. Such effects are for example caused by the required pressure build up (upon beginning of the injection) in the pressure pipes connecting the injection control devices with the injectors, which pressure pipes may be several meters long.

Even though it is possible to a certain degree to compensate the delay between the electronic signals causing the injection and the real injection process by an adjusted timing of the electronic signals, the delay may vary for example due to changing physical properties of the fuel or due to degradation effects in the injection system. Thus, it may be that the desired injection for an optimal, economic and low-emission operation of the combustion engine it not realized, e.g. with respect of the timing and/or the amount of injected fuel.

In addition, the pressure build up in the pressure pipes between the injection control units and the injectors required for the beginning of the injection and/or the pressure drop after termination of the injection may result in considerable pressure blows or pressure waves causing strong mechanical stress acting in particular on the pressure pipes. This stress may result in bending of pipes or the occurrence of leakages in the system.

Starting from this state of the art it is therefore an object of the invention to propose an injection device and a method for injecting a fuel into a cylinder of a large diesel engine, which renders possible a precise control, in particular a precise timing, of the injection process. Furthermore, it is an object of the invention to propose a large diesel engine having such an injection device or being operated with such a method.

The subjects of the invention satisfying these objects are characterized by the features of the independent claim of the respective category.

Thus, in accordance with the invention an injection device is proposed for injecting a fuel into a cylinder of a large diesel engine, comprising an injector extending in an axial direction, and an injection control unit, wherein the injector comprises a fuel inlet for receiving pressurized fuel from a pressure reservoir, a nozzle for injecting the fuel into the cylinder, and a connection line connecting the fuel inlet with the nozzle, wherein the injection control unit comprises a housing, in which an actuator is arranged being movable between an opening position and a closing position, wherein the connection line of the injector is closed when the actuator is in the closing position, and the connection line is open, when the actuator is in the opening position, and wherein the injection control unit comprises a control valve for causing a movement of the actuator between the opening and the closing position, with the control valve being electronically controllable, and wherein the housing of the injection control unit is directly mounted to the injector, so that the housing and the injector form a constructional unit.

Providing the housing of the injection control unit directly at the injector renders possible that the pressurized fuel having the required injection pressure is always present - at least during the normal failure-free operation of the engine - at the fuel inlet of the injector. Thus, the fuel in the pressure line connecting the pressure reservoir for the fuel with the injector has always the injection pressure. When starting, the injection process the pressurized fuel is already present with the injection pressure at the fuel inlet of the injector, i.e. it is avoided that the pressure in said pressure line has to be built up at the beginning of the injection process. This measure considerably reduces the delay between the electric or electronic signal initiating the injection and the real begin of the injection into the cylinder, as well as the delay between the signal for terminating the injection and the real termination of the injection into the cylinder. In addition, the rising edge and the trailing edge of the real injection process become much sharper or steeper, which is advantageous with respect to a well-defined injection process. The response time of the injection device to the electric signals is considerably reduced.

Furthermore, since the injection pressure of the fuel is always present at the fuel inlet of the injector, pressure waves and/or pressure blows in particular in the components, e.g. pipes, arranged between the pressure reservoir and the injector are considerably reduced, which reduces the mechanical stress acting on these components. This results in a safer operation of the engine.

In addition, since the injection control unit is arranged in a separate housing it is very easy to assemble or to disassemble the injection device. The injection control unit can be mounted or separated from the injector very easily and without large efforts.

Preferably the control valve is arranged in a valve housing, with the valve housing being directly mounted to the housing of the injection control unit, so that the valve housing and the housing form a constructional unit. This modular design of the injection device comprising the injector, the separate housing of the injection control unit, and the separate valve housing allows for a particularly easy assembly or disassembly of the injection device. In addition, the modular structure makes it possible to independently repair or replace each of the injector, the injection control unit and the control valve individually. This is considerably advantageous with respect to service or repair work.

In view of reducing the mechanical stress acting on the components as well as reducing the vibrations in the system it is a preferred measure that the fuel inlet is arranged and designed in such a manner that the pressurized fuel enters the fuel inlet in the axial direction, i.e. the fuel enters the injector in the same direction as the direction, in which the injector extends. Since the nozzle of the injector is usually arranged at the axial end of the injector located at or in the combustion chamber, the fuel enters the injector in the same direction as the fuel enters the nozzle of the injector. Both directions are parallel to each other. The fuel inlet may be arranged either coaxially, i.e. aligned, with the nozzle or the fuel inlet may be arranged parallel but not coaxially with the nozzle.

For further reducing vibrations as well as reducing bending movements it is preferred that the actuator is extending perpendicular to the axial direction. This measure is also advantageous to realize a very compact design and to enable an easy assembly or disassembly.

According to a preferred embodiment the injection control unit comprises a sensor for detecting the position of the actuator, or the injector comprises a sensor for detecting the position of a valve member of the injector. By detecting the actual position of the actuator or the valve member it becomes possible to check the relationship between signals sent to the control valve and the movement of the actuator or the valve member, respectively, in response to these signals. This is an additional, optional measure for monitoring the injection timing.

According to a preferred design the control valve comprises an electromagnet for attracting an armature from a first position to a second position, wherein a movement of the armature from the first position to the second position causes the actuator to move from the closing position to the opening position and a movement of the armature from the second position to the first position causes a movement of the actuator from the opening position to the closing position.

Preferably the injection control unit is arranged and configured for receiving a system fluid for moving the actuator from the closing position to the opening position, with the system fluid being different from the fuel. Using a system fluid for moving the actuator, wherein the system fluid is different from the fuel for the combustion in the cylinders, has the advantage that the injection control unit does not require a specific adaption for being operated by the fuel. Furthermore, the actuator of the injection control unit may be moved by means of a pressure which is considerably lower than the injection pressure of the fuel.

Furthermore, it is preferred that the control valve is designed as a monostable control valve. A monostable control valve means that the control valve has only one stable position, the so-called rest position or release condition. The second position, the so-called working position, is only maintained as long as the control valve is piloted by a signal. When the signal is switched off the control valve automatically returns to the stable position. Preferably, the stable position corresponds to the first position, which causes the actuator to stay in or to move to the closing position, and the working position corresponds to the second position, which causes the actuator to move from the closing position to the opening position.

Preferably the injection device further comprises a system control unit for controlling the injection of the fuel, wherein the system control unit is connected to the control valve by a first signal line for sending a fuel injection command to the control valve, wherein the sensor is connected to the system control unit by a second signal line for communicating the position of the actuator to the system control unit, and wherein the system control unit is designed for a closed-loop control of the injection. The option to provide the injection device with a closed-loop control makes it possible to control and to adjust in particular the timing of the individual injection process even more precisely. The sensor for detecting the position of the actuator monitors the actual position of the actuator and provides this information by the second signal line to the system control unit. By continuously monitoring the position of the actuator the movement of the actuator can be detected too. The system control unit compares the movement and in particular the timing of the movement with the desired timing for the injection process. In case there are deviations of the actual movement of the actuator from the desired timing for the injection, the system control unit modifies the signal, in particular the timing of the signal, which is sent via the first signal line to the control valve in order to compensate the detected deviations. The closed-loop control of the injection is in particular advantages to compensate drifts or changes in the injection process occurring during the lifetime of the diesel engine, which changes may be caused for example by degradation or wear of one or more of the components, or by changes of the properties of the fuel. Additionally, the closed-loop control allows for less strict tolerances in the fabrication of the independent parts of the system, in particular the components of the injection device.

According to a preferred embodiment the actuator comprises a control piston and an actuating rod being connected to the control piston, the control piston being arranged in a cylindrical chamber within the housing of the injection control unit, the cylindrical chamber comprising an upstream chamber for receiving a system fluid to move the actuator from the closing position to the opening position, and a downstream chamber, in which the control piston is connected to the actuating rod. For causing the actuator to move from the closing position to the opening position, the upstream chamber is supplied with the system fluid under pressure. The pressure of the system fluid acts upon the control piston and causes a movement of the control piston and the actuating rod connected therewith, which movement opens the connection line of the injector, so that the pressurized fuel can flow from the fuel inlet towards the nozzle of the injector.

According to a preferred design a flow connection between a source for the system fluid and the upstream chamber is open, when the armature is in the second position.

In a preferred embodiment, the end of the actuating rod facing away from the control piston comprises a closing member cooperating with a seat member, preferably arranged in the connection line, wherein the closing member sealingly engages with the seat member, when the actuator is in the closing position, and wherein a flow connection is open between the closing member and the seat member, when the actuator is in the opening position.

A further preferred measure is, that the sensor is arranged in or at the downstream chamber of the injection control unit for detecting the position of the control piston of the actuator. By this location of the sensor, it may be avoided that the sensor is exposed to high temperatures and/or high pressures. When arranging the sensor in or at the downstream chamber, the maximum temperature the sensor is exposed to may be limited for example to 100°C and the maximum pressure the sensor is exposed to may be limited for example to 1.5 bar. Therefore, it is possible to use quite simple sensors, which are not very expensive.

Furthermore, the invention proposes a method for injecting a fuel into a cylinder of a large diesel engine, comprising the steps of:
- providing an injection device designed according to the invention,
- generating a fuel injection command having a length delimited by a beginning and an ending of the fuel injection command,
- sending the fuel injection command to the control valve,
wherein the beginning of the fuel injection command causes the actuator to move from the closing position to the opening position, and wherein the ending of the fuel injection command causes the actuator to move from the opening position to the closing position.

This method enables a precise and reliable injection process, in particular with respect of the timing of the injection.

For the same reasons as it has been explained hereinbefore with respect to the injection device, it is a preferred embodiment of the method, that the position of the actuator is detected and used for a closed-loop control of the injection.

In addition, according to the invention, a large diesel engine, is proposed, especially a large two-stroke diesel engine, wherein the large diesel engine comprises an injection device according to the invention, or is operated with a method according to the invention.

The large diesel engine according to the invention may be designed as a four-stroke engine or as a large two-stroke engine with longitudinal scavenging.

In particular, the large diesel engine according to the invention may be designed as a dual fuel engine for the combustion of a liquid fuel, preferably heavy oil, and for the combustion of a gas.

Further advantageous measures and preferred embodiments of the invention result from the dependent claims.

The invention will be explained in more detail with the help of the schematic drawings, which show:
- Fig. 1:: a schematic illustration of essential parts of an embodiment of a large diesel engine according to the invention comprising an embodiment of an injection device according to the invention,
- Fig. 2:: a schematic illustration of the injector device of Fig. 1 with the injection control unit removed from the injector,
- Fig. 3:: a schematic illustration of the injector device of Fig. 1,
- Fig. 4:: a schematic representation of a fuel injection command,
- Fig. 5:: similar to Fig. 2, but for a variant of the embodiment of the injection device, and
- Fig. 6:: similar to Fig. 1, but illustrating a variant for the arrangement of the sensor.

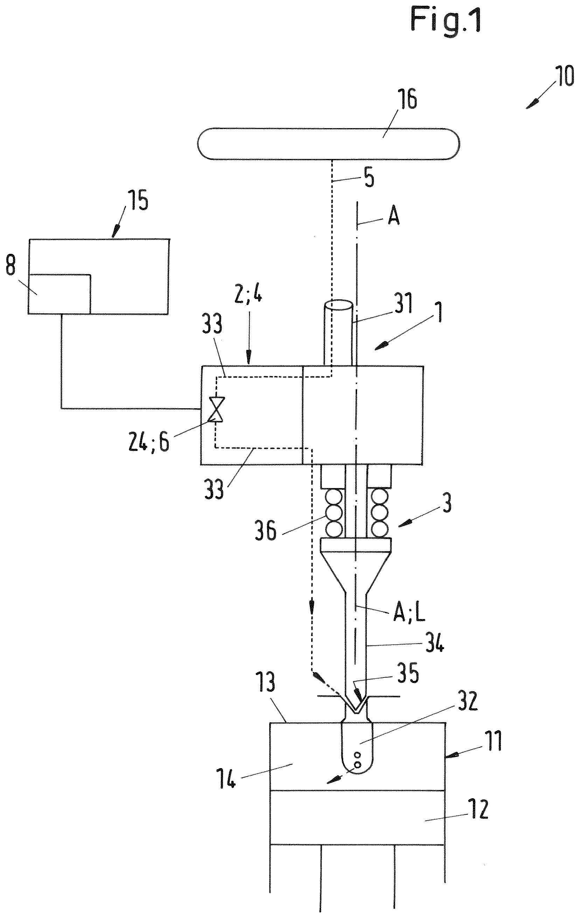

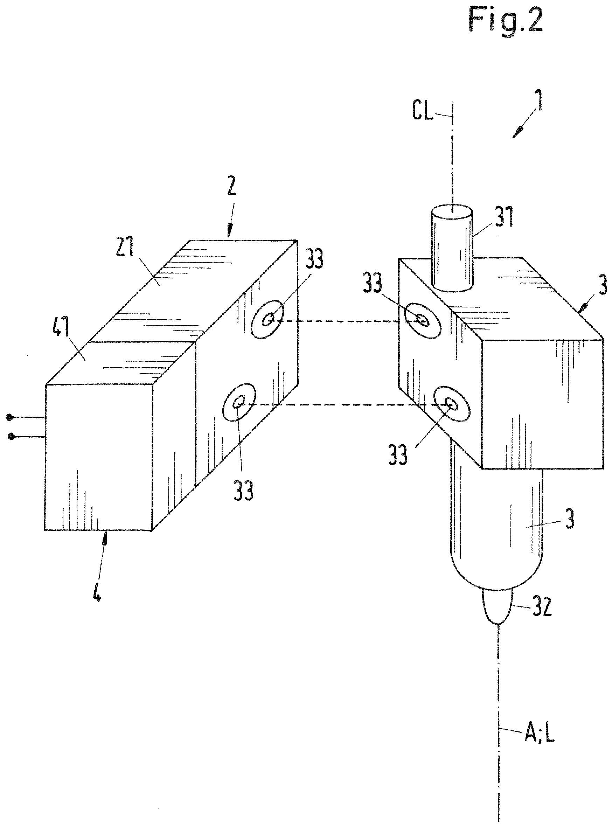

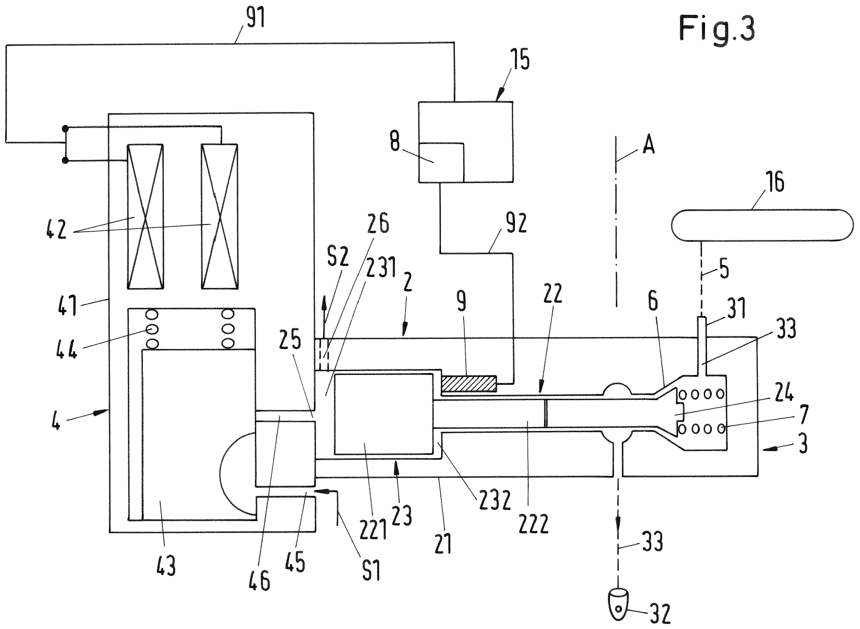

Fig. 1 shows in a schematic representation essential parts of an embodiment of a large diesel engine according to the invention comprising an embodiment of an injection device according to the invention. The large diesel engine is designated in its entity with reference numeral 10 and the injection device is designated in its entity with reference numeral 1. Fig. 2 schematically illustrates the design of the injection device 1 shown in Fig. 1 with the injection control unit removed from the injector. Fig. 3 schematically illustrates the interior design of the injection device 1 shown in Fig. 1.

In the following description reference is made by way of example to an embodiment, wherein the large diesel engine 10 is designed as a large two-stroke diesel engine 10 with longitudinal scavenging. Since these large diesel engines 10 are well known in the art, there is no need for a detailed description.

Of course, the invention is not restricted to this specific type of an internal combustion machine. In particular, the large diesel engine 10 may be any type of large diesel engine as they are used for example as main propulsion units for ships or also in stationary operation, for example for driving large generators for the production of electrical power. The large diesel engine 10 can be designed as two-stroke or four-stroke engine. It is also possible that the large diesel engine 10 is designed as a dual fuel engine for the combustion of a liquid fuel and for the combustion of a gas, for example natural gas. The large diesel engine 10 may also be designed for being operated with more than two different fuels.

The large diesel engine 10 has at least one cylinder 11 but typically more, for example up to fourteen cylinders 11. Since it is sufficient for the understanding of the invention, in Fig. 1 only one cylinder 11 is shown. In the cylinder 11 a piston 12 is arranged for a reciprocating movement between a top dead center and a bottom dead center. The top side of the piston 12 and a cylinder cover 13 together with the cylindrical wall of the cylinder 11 are delimiting a combustion chamber 14, in which a fuel is injected for the combustion. The cylinder 11 further comprises an exhaust valve (not shown) through which the combustion gases are discharged from the combustion chamber 14 to an exhaust gas system (not shown). Usually the exhaust valve is centrally arranged in the cylinder cover 14.

The large two-stroke diesel engine 10 is usually operated with heavy oil. The same is true for the operation of a dual fuel engine in the liquid mode. Nowadays a modern large diesel engine 10 is operated in a fully electronically controlled manner. An engine control unit 15 operates and controls all functions of the large diesel engine 10, for example the operation of the exhaust valves for the gas exchange and the injection process for the fuel, by way of electric or electronic signals and commands. In addition, the engine control unit 15 receives information from several detectors, sensors or measuring devices.

The large diesel engine 10 comprises a common rail system that supplies the fuel, e.g. heavy oil, to the combustion chambers 14 of the cylinders 11. The common rail system comprises a pressure reservoir 16, also called "fuel rail" or "accumulator", which contains the fuel to be delivered to the cylinders 11 under a high pressure that essentially corresponds to the injection pressure. Usually the pressure reservoir 16 is designed as a closed tubular vessel extending along all the cylinders 13 of the engine 10. One or more fuel pumps (not shown) supply the pressure reservoir 16 with the fuel under high pressure. The pressure of the fuel in the pressure vessel 16 has for example a value of 700-900 bar but may also be higher. A fuel booster pump (not shown) which is connected with a reservoir for the fuel (not shown) delivers the fuel to the fuel pumps.

The pressure reservoir 16 is in fluid communication with a plurality of electronically controlled injection devices 1 for injecting the fuel into the combustion chamber 14 of the respective cylinder 11. In Fig. 1 only one injection device 1 is shown. There is at least one injection device 1 for each cylinder 11, however in most large diesel engines there are two or three injector devices 1 for each cylinder 11.

The injection device 1 for injecting the fuel into the combustion chamber 14 of the cylinder 11 comprises an injector 3 for injecting the fuel into the cylinder 11 and an injection control unit 2 for controlling the injection. The injection control unit 2 comprises a control valve 4 for piloting the injection control unit 2.

The injector 3 is extending in an axial direction A, defined by the longitudinal axis L of the injector 3. The injector 3 comprises a fuel inlet 31 for receiving pressurized fuel from the pressure reservoir 16, a nozzle 32 for injecting the fuel into the combustion chamber 14 of the cylinder 11, and a connection line 33 connecting the fuel inlet 31 with the nozzle 32. The nozzle 32 is arranged at an axial end of the injector 3. The fuel inlet 31 is connected to the pressure reservoir 16 by means of a pressure line 5. In a manner known as such a safety valve (not shown) may be provided at the pressure reservoir 16 for delimiting the maximum amount of fuel that is delivered to the injector 3. Only upon occurrence of a malfunction, e.g. a leakage in the pressure line 5, said safety valve closes the fluid connection from the pressure reservoir 16 into the pressure line 5. Otherwise, during normal operation, i.e. failure-free operation, the injection pressure of the fuel, with which the fuel is delivered to the injector 3, is always present at the fuel inlet 31 of the injector 3.

The injector 3 is mounted to the cylinder cover 13 of the cylinder 11 in such a manner that the nozzle 32 extends into the combustion chamber 14.

The injector 3 comprises a valve member 34 cooperating with a valve seat 35 located upstream of the nozzle 32. The valve member 34 is spring loaded by a spring 36 exerting a force that presses the valve member 34 into the valve seat 35. As long as the connection line 33 is closed the pressurized fuel cannot proceed from the fuel inlet 31 to the valve member 34 and the spring 36 forces the valve member 34 in a sealing engagement with the valve seat 35. Thus, no fuel can pass to the nozzle 32.

When an injection into the cylinder 11 is required, the connection line 33 is opened (as will be explained in more detail hereinafter). Now, the pressurized fuel can flow from the fuel inlet 31 to the valve member 34. The high pressure of the fuel prevails the force of the spring 36 and the valve member 34 is lifted from the valve seat 35. In this state the fuel can pass between the valve seat 35 and the valve member 34 to the nozzle 32 for being injected into the combustion chamber 14.

Preferably, the fuel inlet 31 is arranged and designed in such a manner that the pressurized fuel enters the fuel inlet in the axial direction A, i.e. in the same direction as the injector 3 is extending. As can be seen in Fig. 2, in this embodiment the fuel inlet 31 is arranged parallel but non-coaxial with the longitudinal axis L of the injector 3, i.e. a center line CL of the fuel inlet 31 is parallel to the longitudinal axis L of the injector 3, but the center line CL does not coincide with the longitudinal axis L. This arrangement is particularly advantageous to optimize the vibrational stability of the injection device 1 and the pipes connected thereto.

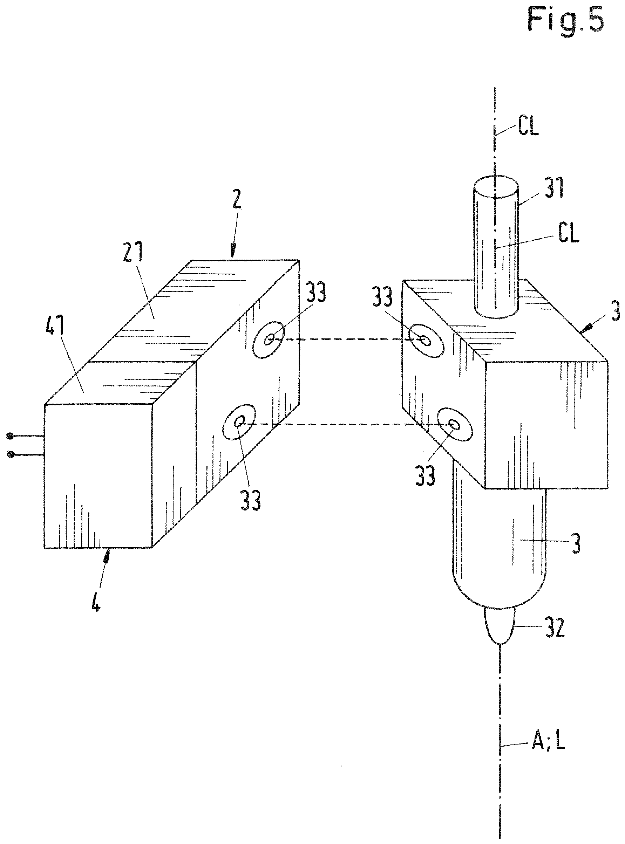

As a variant for the embodiment illustrated in Fig. 2 it is also possible to arrange the fuel inlet 31 such that it is aligned, i.e. coaxial, with the injector 3. This variant is shown in Fig. 5, which otherwise corresponds to Fig. 2. According to this variant the fuel inlet 31 is arranged such that the center line CL of the fuel inlet 31 coincides with the longitudinal axis L of the injector 3, so that the fuel inlet 31 is coaxially arranged with the injector 3.

The injection control unit 2 comprises a housing 21 (Fig. 3), in which an actuator 22 is arranged. The actuator 22 is movable between an opening position and a closing position. When the actuator 22 is in the opening position the connection line 33 is open, so that the pressurized fuel can move from the fuel inlet 31 to the valve member 34 of the injector 3. When the actuator 22 is in the closing position, the connection line 33 of the injector 3 is closed, so that the pressurized fuel cannot flow from the fuel inlet 31 to the valve member 34 of the injector 3.

According to the invention, the housing 21 of the injection control unit 2 is directly mounted to the injector 3, so that the housing 21 and the injector 3 form a constructional unit with the separate housing 21 of the injection control unit 2 being mounted and fixed to the injector 3. Thus, the opening and the closing of the fluid connection between the fuel inlet 31 and the nozzle 32 of the injector 3 - and therewith the injection process - is controlled directly in or at the injector 3. Accordingly, it is avoided that the entire pressure line 5 between the pressure reservoir 16 and the fuel inlet 31 of the injector has to be pressurized first, before the injection can start.

The injection control unit 2 further comprises an electronically controllable control valve 4 for causing a movement of the actuator 22 from the opening position to the closing position and vice versa. The control valve 4 comprises a separate valve housing 41, which is directly mounted to the housing 21 of the injection control unit 2, so that the valve housing 41 and the housing 21 of the injection control unit 2 form a constructional unit.

The modular structure with the separate valve housing 41, the separate housing 21 of the injection control unit 2 and the injector 3, in which the valve housing 41, the housing 21 and the injector 3 are assembled to form a constructional unit, is in particular advantageous in view of repair or service work or in view of a replacement of one of these components.

In the embodiment of the injection control unit 2 shown in Fig. 3 the actuator 22 comprises a control piston 221 and an actuating rod 222 fixedly connected to the control piston 221 or formed integrally with the control piston 221. The control piston 221 is arranged in a cylindrical chamber 23 within the housing 21 and movable forth and back within the cylindrical chamber 23. The control piston 221 divides the cylindrical chamber 23 into an upstream chamber 231, which is delimited by one of the planar end faces of the control piston 221, and a downstream chamber 232, which is delimited by the other planar end face of the control piston 221. The actuating rod 222 is connected with the control piston 221 in the downstream chamber 232.

The end of the actuating rod 222, which faces away from the control piston 221 comprises a closing member 24 cooperating with a seat member 6, which is preferably arranged in the connection line 33. Depending on the specific design the seat member 6 may be located either in the injection control unit 2 or in the injector 3. Preferably, the seat member 6 is arranged in the injector 3. The closing member 24 and the seat member 6 are configured to engage with each other, so that the closing member 24 sealingly engages with the seat member 6 when the actuator 22 is in the closing position. When the actuator 22 is in the opening position a flow connection is open between the closing member 24 and the seat member 6, so that the pressurized fuel can flow from the fuel inlet 31 towards the nozzle 32 of the injector 3. The closing member 24 is spring loaded by a spring 7 forcing the closing member 24 in a sealing contact with the seat member 6.

The actuator 22 is extending perpendicular to the axial direction A. The connection line 33 starting in the axial direction A at the fuel inlet 31 turns in a direction perpendicular to the axial direction A, passes the closing member 24 and the seat member 6 and then turns back into the axial direction A towards the nozzle 32.

The injection device 1 is designed for being operated or actuated with a system fluid, for example a system oil or a hydraulic oil. Preferably, the system fluid for operating the injection device 1 is different from the fuel that is used for the combustion in the cylinders 11. The system fluid is typically available in large diesel engines 10 and used for example for piloting the exhaust valves of the cylinders 11. The system fluid is available from a source containing the system fluid under an operation pressure. Typically, the operation pressure of the system fluid is considerably lower than the injection pressure of the fuel. As an example, the operation pressure of the system fluid is in the range of 100 bar at 0% engine load (idle) and 250 bar at 100% engine load (full load). Using a system fluid that is different from the fuel, which is injected into the cylinder 11 for the combustion process, has the advantage that the system fluid may be provided to the injection device 1 at a considerably lower pressure as compared to the pressure of the fuel in the pressure reservoir 16. In addition, the use of a system fluid such as a hydraulic oil for operating the injection device 1 usually requires much less effort than using the fuel, e.g. heavy oil, for operating the injection device. Using for example heavy oil for switching the actuator 22 from the closing position to the opening position requires specific valves or switching devices, which are able to be operated by heavy oil.

Therefore it is preferred to use a system fluid, e.g. a system oil or a hydraulic liquid, which is different from the fuel used for the combustion process. Said system fluid is used for operating the injection device 1 and in particular for switching or moving the actuator 22 of the control unit 2 from the closing position to the opening position.

Alternatively, it is in principle also possible to design the injection device 1 for being operated or actuated (in an analogous manner) with the fuel that is used for the combustion in the cylinders 11, e.g. heavy oil.

The upstream chamber 231 of the injection control unit 2 comprises an inlet 25 for supplying the system fluid to the upstream chamber 231 as well as a discharge passage 26 for discharging the system fluid from the upstream chamber 231, as indicated by the arrow S2 in Fig. 3. The discharge passage 26 may be designed to function as a throttle such that a pressure builds up in the upstream chamber 231, when the system fluid is supplied to the upstream chamber 231.

The control valve 4 for piloting the injection control unit 2 comprises an electromagnet 42 and an armature 43, which can be attracted by the electromagnet 42. The armature 43 is movable between a first position and a second position. A valve spring 44 is arranged for acting on the armature 43 and for biasing the armature 43 towards the first position, which is shown in Fig. 3. As long as the electromagnet 42 is not energized, the spring load of the valve spring 44 forces and holds the armature 43 in the first position. When the electromagnet 42 is energized, it attracts the armature 43 and therewith moves the armature 43 against the spring load of the valve spring 44 to the second position. As long as the electromagnet 42 is energized the armature remains in the second position. As soon as the electromagnet 42 is switched off, the valve spring 44 forces the armature 43 back into the first position. Thus, the control valve 4 is designed as a monostable control valve 4. The armature 43 is only in the second position as long as the electromagnet 42 is energized.

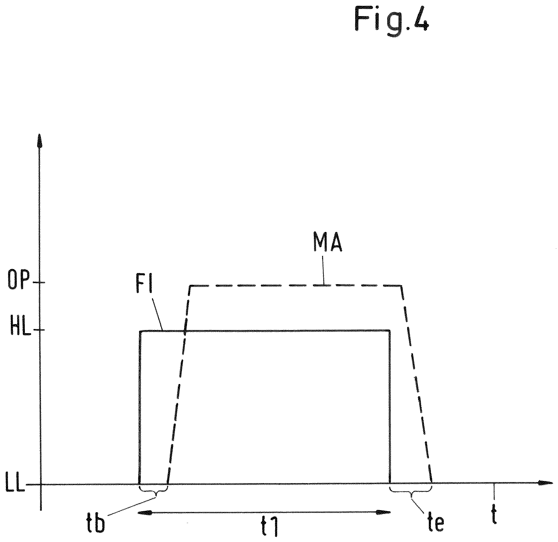

The control valve 4 is connected to a system control unit 8 via a first signal line 91. The system control unit 8 for controlling the injection device 1 may be integrated into the engine control unit 15. By means of the first signal line 91 the control unit 8 may send a fuel injection command FI (Fig. 4) to the control valve 4, which fuel injection command FI energizes the electromagnet 42.

The control valve 4 further comprises an intake 45 for the system fluid, which is in fluid communication with the source (not shown) for the system fluid. Furthermore, the control valve 4 comprises an outlet 46 for the system fluid, which outlet 46 is in fluid communication with the inlet 25 of the upstream chamber 231 of the injection control unit 2.

The control valve 4 is configured in such a manner, that a flow connection between the intake 45 and the outlet 46 is open, when the armature 43 is in the second position, and that said flow connection is closed when the armature 43 is in the first position. Thus, when the armature 43 is in the second position, the system fluid can flow through the intake 45 (as indicated by the arrow S1 in Fig. 3), the outlet 46 and the inlet 25 into the upstream chamber 231 of the injection control unit 2. When the armature 43 is in the first position the fluid passage between the intake 45 and the outlet 46 is closed, so that no system fluid can flow into the upstream chamber 231.

Fig. 4 shows an example for the fuel injection command FI for controlling the injection device 1. In Fig. 4 reference numeral t designates a time axis t. The fuel injection command FI is essentially a rectangular signal, having a beginning (rising edge), at which the signal changes from a low-level LL to a high-level HL, and an ending (trailing edge), at which the signal changes from the high-level HL to the low-level LL. Thus, the duration or the length of the fuel injection command FI is the time difference t1 between the beginning and the ending of the fuel injection command FI. As long as the fuel injection command FI is on the high-level HL the electromagnet 42 is energized and attracts the armature 43 to the second position. When the fuel injection command FI changes from the high-level HL to the low-level LL, the electromagnet 42 is switched off and the armature 43 returns to the first position.

The injection device 1 operates in the following way. As long as no injection is required into the cylinder 11, the armature 43 is in the first position, in which the fluid passage between the intake 45 and the outlet 46 is closed. The actuator 22 of the injection control unit 2 is in the closing position. The spring 7 acting upon the closing member 24 forces the closing member 24 in a sealing contact with the seat member 6. Thus, the connection line 33 between the fuel inlet 31 and the nozzle 32 is closed and the spring 36 (Fig. 1) acting upon the valve member 34 of the injector 3 presses the valve member 34 in a sealing contact with the valve seat 35, so that no fuel can proceed to the nozzle 32.

When an injection of fuel into the cylinder 11 is required, the system control unit 8 sends the fuel injection command FI with the duration t1 to the control valve 4. The electromagnet 42 attracts the armature 43, which moves from the first position to the second position and therewith opens the flow connection between the intake 45 and the outlet 46. The system fluid enters the upstream chamber 231 through the inlet 25. By this, the pressure in the upstream chamber 231 increases and generates a force acting on the control piston 221. This force prevails the spring load generated by the spring 7 and moves the actuator 22 from the closing position to the opening position, i.e. to the right according to the representation in Fig. 3. Therefore, the closing member 24 at the end of the actuating rod 222 is lifted from the seat member 6, therewith opening the flow connection between the closing member 24 and the seat member 6. Now the connection line 33 is open and the pressurized fuel proceeds from the fuel inlet 31 of the injector 3 to the region of the valve member 34. The high pressure of the fuel acting on the valve member 34 prevails the spring load of the spring 36, so that the valve member 34 is lifted from the valve seat 35. In this state the fuel can pass between the valve seat 35 and the valve member 34 to the nozzle 32 for being injected into the combustion chamber 14 of the cylinder 11.

At the ending of the fuel injection command FI when the signal changes from the high-level HL to the low-level LL, the electromagnet 42 is switched off and supported by the action of the valve spring 44 the armature moves from the second position to the first position, therewith closing the flow connection for the system fluid between the intake 45 and the outlet 46. The system fluid is discharged from the upstream chamber 231 through the discharge passage 26, so that the pressure in the upstream chamber 231 is released. The force of the spring 7 supported by the force generated by the pressurized fuel in the connection line 33 upstream of the closing member 24 moves the closing member 24 towards the seat member 6, i.e. to the left according to the representation in Fig. 3. The closing member 24 is pressed against the seat member 6 and sealingly engages with the seat member 6. Thus, the actuator 22 is in the closing position, in which the connection line 33 of the injector 3 is closed. As a consequence, the pressure of the fuel at the valve member 34 decreases and the spring 36 forces the valve member 34 into a sealing contact with the valve seat 35. The fuel can no longer proceed to the nozzle 32 and the injection of the fuel into the combustion chamber 14 is terminated.

Thus, the injection of the fuel is controlled by the fuel injection command FI, wherein the beginning of the fuel injection command FI determines the crank angle at which the injection of fuel into the respective cylinder begins and the duration t1 of the fuel injection command FI determines how long the fuel is injected into the respective cylinder 11. Usually, since the injection pressure of the fuel or the pressure of the fuel in the pressure reservoir 16 is kept at a constant value, the duration t1 of the fuel injection command FI also determines the amount of fuel that is injected into the cylinder.

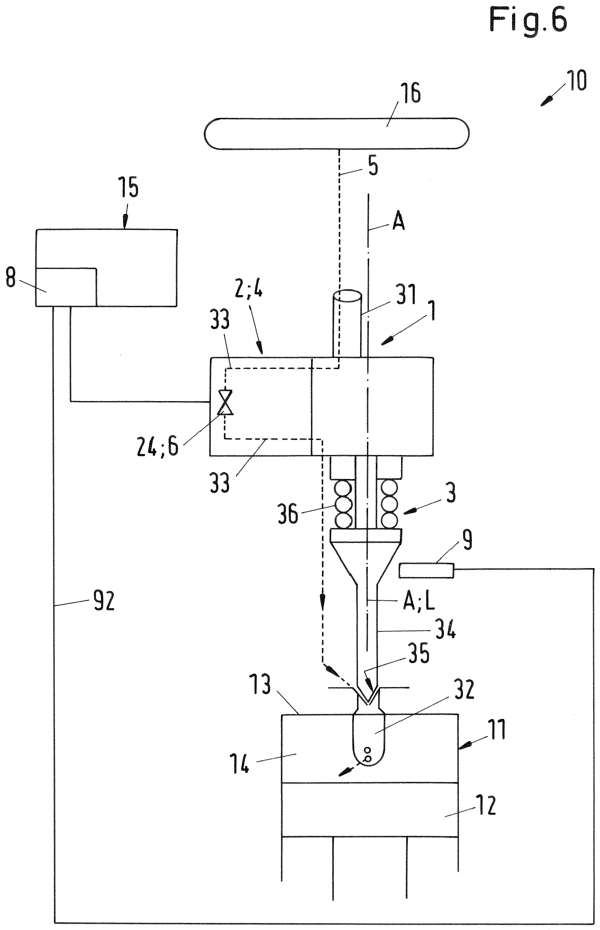

As an advantageous option, but not necessarily, the injection device 1 may additionally comprise a sensor 9 (Fig. 3) for detecting the position of the actuator 22 or the position of the valve member (Fig. 6). The sensor 9 is connected to the system control unit 8 by a second signal line 92 for communicating the measured signal to the system control unit 8.

If the sensor 9 is arranged for detecting the position of the actuator 22 (Fig. 3), the sensor 9 is preferably arranged within the housing of the injection control unit 2. According to a preferred embodiment shown in Fig. 3 the sensor is arranged in or at the downstream chamber 232 of the injection control unit 2 for detecting the position of the control piston 221 of the actuator 22. More precisely, the sensor 9 is arranged and designed to measure the actual distance of the planar end face of the control piston 221, which delimits the downstream chamber 232, from the sensor 9. The sensor 9 is arranged to face said planar end face of the control piston 221.

The sensor 9 may be designed in any known manner for measuring a distance or a displacement. For example, the sensor 9 may be designed as an induction based sensor 9 or as a capacitive sensor 9. By continuously monitoring the actual position of the actuator 22 in particular during the entire injection process, the movement of the actuator 22 may be determined. In Fig. 4 the dashed curve MA represents the movement of the actuator 22 as measured by means of the sensor 9. The points (or regions) where the curve MA touches the time axis t corresponds to the actuator 22 being in the closing position and the region where the curve MA is on the constant level OP corresponds to the actuator 22 being in the opening position. By the physically caused delay (response time) the moving of the actuator 22 from the closing position to the opening position starts somewhat later than the beginning of the fuel injection command FI and the moving of the actuator 22 from the opening position to the closing position starts somewhat later than the ending of the fuel injection command. These delays are indicated in Fig. 4 by the time intervals tb and te, respectively. Of course, the delay tb between the beginning of the fuel injection command FI and the beginning of the movement of the actuator 22 is not necessarily equal to the delay te between the ending of the fuel injection command FI and the beginning of the movement of the actuator 22 from the opening position to the closing position.

By comparing the timing of the fuel injection command FI with the curve MA representing the movement of the actuator 22 any change for example in the delays tb and te may be detected. Such changes may occur during the lifetime of the large diesel engine 10 and may be caused e.g. by degradation or wear. Thus, monitoring tb and te may be helpful to detect the need for service or repair work on the injection system of the large diesel engine 10.

Preferably, the sensor 9 and the position of the actuator 22 detected by the sensor 9 is used for a closed-loop control of the injection. The sensor 9 continuously detects the actual position of the actuator 22 and communicates the respective signal to the system control unit 8 via the second signal line 92. The system control unit 8 determines the curve MA (Fig. 4) or any equivalent thereof and compares the curve MA with the fuel injection command FI, for example by determining the delays tb and te. In case the deviation of the curve MA from the fuel injection command FI does not fall within a preset range, meaning that the injection timing does not coincide with the desired injection timing, the system control unit 8 corrects the fuel injection command FI and sends the corrected fuel injection command FI to the control valve 4 by means of the first signal line 91.

By this closed-loop control of the fuel injection it is ensured that the timing of the fuel injection always corresponds to the desired timing for the injection.

It is also possible to arrange the sensor 9 at other locations. For example, the sensor 9 may be arranged laterally with respect to the control piston 221 or the actuating rod 222, respectively. In such an arrangement, the control piston 221 or the actuating rod 222 may be designed conically to allow for a detection of the position of the actuator 22. It is also possible to provide the actuator 22 with markers, for example magnetic markers, to render possible the detection of the actual position of the actuator 22 by means of the sensor 9.

In principle, each configuration of the sensor 9 and/or the actuator 22 is possible, which allows for the detection of the actual position or the movement of the actuator 22. However, it is preferred to arrange the sensor 9 at a location, where the sensor 9 is not exposed to high temperatures, e.g. temperatures of more than 100°C, and/or not exposed to very high pressures, e. g. pressures.

As a variant, it is also possible to arrange the sensor 9 such, that the sensor 9 detects the position of the valve member 34 of the injector 3. The actual position of the valve member 34 provides essentially the same information regarding the fuel injection as the actual position of the actuator 22. Fig. 6, which otherwise corresponds to Fig. 1 illustrates such a variant. The sensor 9 is arranged at or in the injector 3 at a location, which allows for the detection of the actual position of the valve member 34 of the injector 3. By detecting the actual position of the valve member 34 it is also possible - as an alternative to the detection of the actual position of the actuator 22 - to monitor or to control the injection process, in particular the beginning and the end of the fuel injection.

## Claims

1. An injection device for injecting a fuel into a cylinder (11) of a large diesel engine, comprising an injector (3) extending in an axial direction (A), and an injection control unit (2), wherein the injector (3) comprises a fuel inlet (31) for receiving pressurized fuel from a pressure reservoir (16), a nozzle (32) for injecting the fuel into the cylinder (11), and a connection line (33) connecting the fuel inlet (31) with the nozzle (32), wherein the injection control unit (2) comprises a housing (21), in which an actuator (22) is arranged being movable between an opening position and a closing position, wherein the connection line (33) of the injector (3) is closed when the actuator (22) is in the closing position, and the connection line (33) is open, when the actuator (22) is in the opening position, and wherein the injection control unit (2) comprises a control valve (4) for causing a movement of the actuator (22) between the opening and the closing position, with the control valve (4) being electronically controllable, **characterized in that** the housing (21) of the injection control unit (2) is directly mounted to the injector (3), so that the housing (21) and the injector (3) form a constructional unit.

2. An injection device in accordance with claim 1, wherein the control valve (4) is arranged in a valve housing (41) with the valve housing (41) being directly mounted to the housing (21) of the injection control unit (2), so that the valve housing (41) and the housing (21) form a constructional unit.

3. An injection device in accordance with anyone of the preceding claims, wherein the fuel inlet (31) is arranged and designed in such a manner that the pressurized fuel enters the fuel inlet (31) in the axial direction (A).

4. An injection device in accordance with anyone of the preceding claims, wherein the actuator (22) is extending perpendicular to the axial direction (A).

5. An injection device in accordance with anyone of the preceding claims, wherein the injection control unit (2) comprises a sensor (9) for detecting the position of the actuator (22), or wherein the injector (3) comprises a sensor (9) for detecting the position of a valve member (34) of the injector (3).

6. An injection device in accordance with anyone of the preceding claims, wherein the control valve (4) comprises an electromagnet (42) for attracting an armature (43) from a first position to a second position, wherein a movement of the armature (43) from the first position to the second position causes the actuator (22) to move from the closing position to the opening position and a movement of the armature (43) from the second position to the first position causes a movement of the actuator (22) from the opening position to the closing position.

7. An injection device in accordance with anyone of the preceding claims, wherein the injection control unit (2) is arranged and configured for receiving a system fluid for moving the actuator (22) from the closing position to the opening position, with the system fluid being different from the fuel.

8. An injection device in accordance with anyone of claims 5-7, further comprising a system control unit (8) for controlling the injection of the fuel, wherein the system control unit (8) is connected to the control valve (4) by a first signal line (91) for sending a fuel injection command (FI) to the control valve (4), wherein the sensor (9) is connected to the system control unit (8) by a second signal line (92) for communicating the position of the actuator (22) to the system control unit (8), and wherein the system control unit (8) is designed for a closed-loop control of the injection.

9. An injection device in accordance with anyone of the preceding claims, wherein the actuator (22) comprises a control piston (221) and an actuating rod (222) being connected to the control piston (221), the control piston (221) being arranged in a cylindrical chamber (23) within the housing (21) of the injection control unit (2), the cylindrical chamber (23) comprising an upstream chamber (231) for receiving a system fluid to move the actuator (22) from the closing position to the opening position, and a downstream chamber (232), in which the control piston (221) is connected to the actuating rod (222).

10. An injection device in accordance with claim 9 and claim 6, wherein a flow connection between a source for the system fluid and the upstream chamber (231) is open, when the armature (43) is in the second position.

11. An injection device in accordance with anyone of claims 9-10, wherein the end of the actuating rod (222) facing away from the control piston (221) comprises a closing member (24) cooperating with a seat member (6), preferably arranged in the connection line (33), wherein the closing member (24) sealingly engages with the seat member (6), when the actuator (22) is in the closing position, and wherein a flow connection is open between the closing member (24) and the seat member (6), when the actuator (22) is in the opening position.

12. An injection device in accordance with anyone of claims 9-11, wherein the sensor (9) is arranged in or at the downstream chamber (232) of the injection control unit (2) for detecting the position of the control piston (221) of the actuator (22).

13. A method for injecting a fuel into a cylinder of a large diesel engine, **characterized by** the steps of:
- providing an injection device (1) designed according to anyone of the preceding claims,
- generating a fuel injection command (FI) having a length (t) delimited by a beginning and an ending of the fuel injection command (FI),
- sending the fuel injection command (FI) to the control valve (4), wherein the beginning of the fuel injection command (FI) causes the actuator (22) to move from the closing position to the opening position, and wherein the ending of the fuel injection command (FI) causes the actuator (22) to move from the opening position to the closing position.

14. A method in accordance with claim 13, wherein the position of the actuator (22) is detected and used for a closed-loop control of the injection.

15. A large diesel engine, especially a large two-stroke diesel engine, **characterized in that** the large diesel engine comprises an injection device according to anyone of claims 1-12 or is operated with a method according to anyone of claims 13-14.
